(19) **Europäisches Patentamt European Patent Office Office européen des brevets**

(11) **EP 4 099 599 A1**

(12) **EUROPEAN PATENT APPLICATION**

(43) Date of publication:
**07.12.2022 Bulletin 2022/49**

(21) Application number: **22175973.1**

(22) Date of filing: **30.05.2022**

(51) International Patent Classification (IPC):
**H04L 1/18** *(2006.01)* **H04L 1/20** *(2006.01)*

(52) Cooperative Patent Classification (CPC):
**H04L 1/1864; H04L 1/203**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.06.2021 FI 20215659**

(71) Applicant: **Nokia Solutions and Networks Oy 02610 Espoo (FI)**

(72) Inventor: **CHMIEL, Mieszko 53-441 Wroclaw (PL)**

(74) Representative: **Nokia EPO representatives Nokia Technologies Oy Karakaari 7 02610 Espoo (FI)**

(54) **IMPROVING LINK ADAPTATION**

(57)    A method comprising receiving a feedback indicating correctness of data channel decoding, determining that the feedback is an ambiguous feedback, determining an average estimated control channel block error rate, comparing the average estimated control channel block error rate to a feature associated with a control channel block error rate, and, based on the comparison, interpreting the feedback as one of the following: a negative acknowledgement or a discontinuous transmission.

**EP 4 099 599 A1**

S1 | Receive a feedback from a receiving device

S2 | The feedback is ambiguous

S3 | Is the feedback more likely to be NACK?

No

Yes

S4 | Interpret as NACK

S5 | Interpret as DTX

**FIG. 2**

**Description**

**Field**

The following exemplary embodiments relate to wireless communication and to a transmission channel used in wireless communication.

**Background**

Wireless communication enables connectivity for various types of devices. The wireless communication may use a radio link to transmit data between devices. Yet, conditions for the radio link vary as the environment is not static. To adapt to the varying conditions, link adaptation is utilized. Therefore, it is desirable to have as good link adaptation as possible to ensure good quality of the wireless communication.

**Brief Description**

The scope of protection sought for various embodiments is set out by the independent claims. The exemplary embodiments and features, if any, described in this specification that do not fall under the scope of the independent claims are to be interpreted as examples useful for understanding various embodiments of the invention.

According to a first aspect there is provided an apparatus comprising at least one processor, and at least one memory including a computer program code, wherein the at least one memory and the computer program code are configured, with the at least one processor, to cause the apparatus to receive a feedback, wherein the feedback indicates if a data channel was decoded correctly or not, determine that the feedback is an ambiguous feedback, determine an average estimated control channel block error rate, compare the average estimated control channel block error rate to a feature associated with a control channel block error rate, and, based on the comparison, determine if the feedback is to be interpreted as a negative acknowledgement or a discontinuous transmission.

According to a second aspect there is provided an apparatus comprising means for receiving a feedback, wherein the feedback indicates if a data channel was decoded correctly or not, determining that the feedback is an ambiguous feedback, determining an average estimated control channel block error rate, comparing the average estimated control channel block error rate to a feature associated with a control channel block error rate, and, based on the comparison, determining if the feedback is to be interpreted as a negative acknowledgement or a discontinuous transmission.

According to a third aspect there is provided a method comprising receiving a feedback, wherein the feedback indicates if a data channel was decoded correctly or not, determining that the feedback is an ambiguous feedback, determining an average estimated control channel block error rate, comparing the average estimated control channel block error rate to a feature associated with a control channel block error rate, and, based on the comparison, determining if the feedback is to be interpreted as a negative acknowledgement or a discontinuous transmission.

According to a fourth aspect there is provided a computer program comprising instructions for causing an apparatus to perform at least the following: receive a feedback, wherein the feedback indicates if a data channel was decoded correctly or not, determine that the feedback is an ambiguous feedback, determine an average estimated control channel block error rate, compare the average estimated control channel block error rate to a feature associated with a control channel block error rate, and, based on the comparison, determine if the feedback is to be interpreted as a negative acknowledgement or a discontinuous transmission.

According to a fifth aspect there is provided a computer program product comprising instructions for causing an apparatus to perform at least the following: receive a feedback, wherein the feedback indicates if a data channel was decoded correctly or not, determine that the feedback is an ambiguous feedback, determine an average estimated control channel block error rate, compare the average estimated control channel block error rate to a feature associated with a control channel block error rate, and, based on the comparison, determine if the feedback is to be interpreted as a negative acknowledgement or a discontinuous transmission.

According to a sixth aspect there is provided a computer program comprising instructions stored thereon for performing at least the following: receive a feedback, wherein the feedback indicates if a data channel was decoded correctly or not, determine that the feedback is an ambiguous feedback, determine an average estimated control channel block error rate, compare the average estimated control channel block error rate to a feature associated with a control channel block error rate, and, based on the comparison, determine if the feedback is to be interpreted as a negative acknowledgement or a discontinuous transmission.

According to a seventh aspect there is provided a non-transitory computer readable medium comprising program instructions for causing an apparatus to perform at least the following: receive a feedback, wherein the feedback indicates if a data channel was decoded correctly or not, determine that the feedback is an ambiguous feedback, determine an average estimated control channel block error rate, compare the average estimated control channel block error rate to a feature associated with a control channel block error rate, and, based on the comparison, determine if the feedback is to be interpreted as a negative acknowledgement or a discontinuous transmission.

According to an eight aspect there is provided non-transitory computer readable medium comprising program instructions stored thereon for performing at least the following: receive a feedback, wherein the feedback indicates if a data channel was decoded correctly or not, determine that the feedback is an ambiguous feedback, determine an average estimated control channel block error rate, compare the average estimated control channel block error rate to a feature associated with a control channel block error rate, and, based on the comparison, determine if the feedback is to be interpreted as a negative acknowledgement or a discontinuous transmission.

**List of Drawings**

In the following, the invention will be described in greater detail with reference to the embodiments and the accompanying drawings, in which

FIG. 1 illustrates an exemplary embodiment of a radio access network.
FIG. 2 illustrates a flow chart according to an exemplary embodiment.
FIG. 3 illustrates an exemplary graph for a theoretical assumption.
FIG. 4 and 5 illustrate exemplary embodiments of an apparatus.

**Description of Embodiments**

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device. The above-described embodiments of the circuitry may also be considered as embodiments that provide means for carrying out the embodiments of the methods or processes described in this document.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), graphics processing units (GPUs), processors, controllers, microcontrollers, microprocessors, other electronic units designed to perform the functions described herein, or a combination thereof. For firmware or software, the implementation can be carried out through modules of at least one chipset (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via any suitable means. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

As used herein, the term "determining" (and grammatical variants thereof) may include, as a non-exhaustive listing, for example calculating, computing, processing, deriving, measuring, investigating, looking up (e.g., looking up in a table, a database or another data structure), ascertaining and the like. Also, "determining" may include receiving (e.g., receiving information), accessing (e.g., accessing data in a memory), obtaining and the like. Also, "determining" may include resolving, selecting, choosing, establishing, and the like.

In the following, different exemplifying embodiments will be described using, as an example of an access architecture to which the embodiments may be applied, a radio access architecture based on long term evolution advanced (LTE Advanced, LTE-A) or new radio (NR, 5G), without restricting the embodiments to such an architecture, however. The embodiments may also be applied to other kinds of communications networks having suitable means by adjusting parameters and procedures appropriately. Some examples of other options for suitable systems are the universal mobile telecommunications system (UMTS) radio access network (UTRAN or E-UTRAN), long term evolution (LTE, the same as E-UTRA), wireless local area network (WLAN or WiFi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

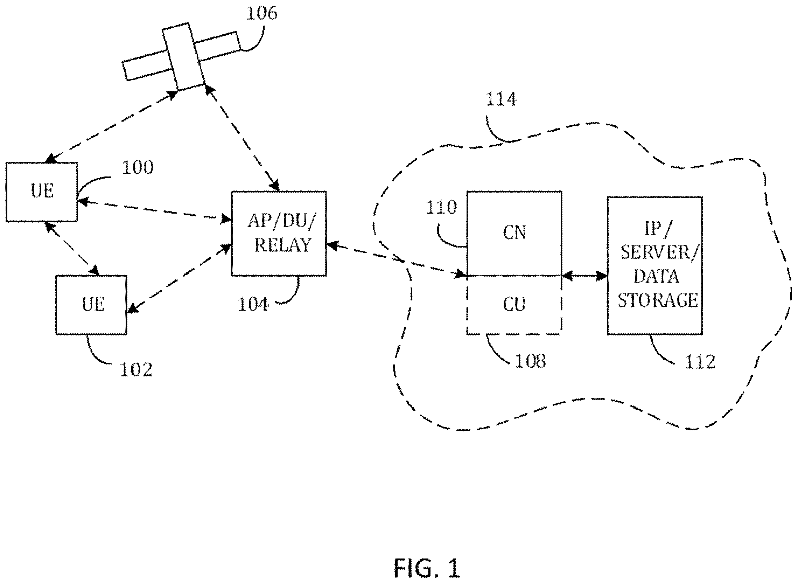

FIG.1 depicts examples of simplified system architectures only showing some elements and functional entities, all being logical units, whose implementation may differ from what is shown. The connections shown in FIG. 1 are logical connections; the actual physical connections may be different. It is apparent to a person skilled in the art that the system typically comprises also other functions and structures than those shown in FIG. 1.

The embodiments are not, however, restricted to the system given as an example but a person skilled in the art may apply the solution to other communication systems provided with necessary properties.

The example of FIG. 1 shows a part of an exemplifying radio access network. FIG. 1 shows devices 100 and 102. The devices 100 and 102 may, for example, be user devices. The devices 100 and 102 are configured to be in a wireless connection on one or more communication channels with a node 104. The node 104 is further connected to a core network 110. In one example, the node 104 may be an access node such as (e/g)NodeB providing or serving devices in a cell. In one example, the node 104 may be a non-3GPP access node. The physical link from a device to a (e/g)NodeB is called uplink or reverse link and the physical link from the (e/g)NodeB to the device is called downlink or forward link. It should be appreciated that (e/g)NodeBs or their functionalities may be implemented by using any node, host, server or access point etc. entity suitable for such a usage.

A communications system typically comprises more than one (e/g)NodeB in which case the (e/g)NodeBs may also be configured to communicate with one another over links, wired or wireless, designed for the purpose. These links may be used for signalling purposes. The (e/g)NodeB is a computing device configured to control the radio resources of communication system it is coupled to. The NodeB may also be referred to as a base station, an access point or any other type of interfacing device including a relay station capable of operating in a wireless environment. The (e/g)NodeB includes or is coupled to transceivers. From the transceivers of the (e/g)NodeB, a connection is provided to an antenna unit that establishes bidirectional radio links to devices. The antenna unit may comprise a plurality of antennas or antenna elements. The (e/g)NodeB is further connected to the core network 110 (CN or next generation core NGC). Depending on the system, the counterpart on the CN side can be a serving gateway (S-GW, routing and forwarding user data packets), packet data network gateway (P-GW), for providing connectivity of devices (UEs) to external packet data networks, or mobile management entity (MME), etc.

The device (also called user device, UE, user equipment, user terminal, terminal device, etc.) illustrates one type of an apparatus to which resources on the air interface are allocated and assigned, and thus any feature described herein with a device may be implemented with a corresponding apparatus, such as a relay node. An example of such a relay node is a layer 3 relay (self-backhauling relay) towards the base station.

The device typically refers to a device (e.g. a portable or non-portable computing device) that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a device may also be a nearly exclusive uplink only device, of which an example is a camera or video camera loading images or video clips to a network. A device may also be a device having capability to operate in Internet of Things (IoT) network which is a scenario in which objects are provided with the ability to transfer data over a network without requiring human-to-human or human-to-computer interaction, e.g. to be used in smart power grids and connected vehicles. The device may also utilise cloud. In some applications, a device may comprise a user portable device with radio parts (such as a watch, earphones or eyeglasses) and the computation is carried out in the cloud. The device (or in some embodiments a layer 3 relay node) is configured to perform one or more of user equipment functionalities. The device may also be called a subscriber unit, mobile station, remote terminal, access terminal, user terminal or user equipment (UE) just to mention but a few names or apparatuses.

Various techniques described herein may also be applied to a cyber-physical system (CPS) (a system of collaborating computational elements controlling physical entities). CPS may enable the implementation and exploitation of massive amounts of interconnected information and communication technologies, ICT, devices (sensors, actuators, processors microcontrollers, etc.) embedded in physical objects at different locations. Mobile cyber physical systems, in which the physical system in question has inherent mobility, are a subcategory of cyber-physical systems. Examples of mobile physical systems include mobile robotics and electronics transported by humans or animals. Additionally, although the apparatuses have been depicted as single entities, different units, processors and/or memory units (not all shown in FIG. 1) may be implemented.

5G enables using multiple input - multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors and real-time control. 5G is expected to have multiple radio interfaces, namely below 6GHz, cmWave and mmWave, and also being integrable with existing legacy radio access technologies, such as the LTE. Integration with the LTE may be implemented, at least in the early phase, as a system, where macro coverage is provided by the LTE and 5G radio interface access comes from small cells by aggregation to the LTE. In other words, 5G is planned to support both inter-RAT operability (such as LTE-5G) and inter-RI operability (inter-radio interface operability, such as below 6GHz - cmWave, below 6GHz - cmWave - mmWave). One of the concepts considered to be used in 5G networks is network slicing in which multiple independent and dedicated virtual sub-networks (network instances) may be created within the same infrastructure to run services that have different requirements on latency, reliability, throughput and mobility.

The current architecture in LTE networks is fully distributed in the radio and fully centralized in the core network. The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications).

The communication system is also able to communicate with other networks, such as a public switched telephone network or the Internet 112, or utilize services provided by them. The communication network may also be able to support the usage of cloud services, for example at least part of core network operations may be carried out as a cloud service (this is depicted in FIG. 1 by "cloud" 114). The communication system may also comprise a central control entity, or a like, providing facilities for networks of different operators to cooperate for example in spectrum sharing.

The technology of Edge cloud may be brought into a radio access network (RAN) by utilizing network function virtualization (NVF) and software defined networking (SDN). Using the technology of edge cloud may mean access node operations to be carried out, at least partly, in a server, host or node operationally coupled to a remote radio head or base station comprising radio parts. It is also possible that node operations will be distributed among a plurality of servers, nodes or hosts. Application of cloudRAN architecture enables RAN real time functions being carried out at the RAN side (in a distributed unit, DU 104) and non-real time functions being carried out in a centralized manner (in a centralized unit, CU 108).

It should also be understood that the distribution of labour between core network operations and base station operations may differ from that of the LTE or even be non-existent. Some other technology advancements probably to be used are Big Data and all-IP, which may change the way networks are being constructed and managed. 5G (or new radio, NR) networks are being designed to support multiple hierarchies, where MEC servers can be placed between the core and the base station or NodeB (gNB). It should be appreciated that MEC can be applied in 4G networks as well.

5G may also utilize satellite communication to enhance or complement the coverage of 5G service, for example by providing backhauling. Possible use cases are providing service continuity for machine-to-machine (M2M) or Internet of Things (IoT) devices or for passengers on board of vehicles, or ensuring service availability for critical communications, and future railway/maritime/aeronautical communications. Satellite communication may utilise geostationary earth orbit (GEO) satellite systems, but also low earth orbit (LEO) satellite systems, in particular mega-constellations (systems in which hundreds of (nano)satellites are deployed). Each satellite 106 in the mega-constellation may cover several satellite-enabled network entities that create on-ground cells. The on-ground cells may be created through an on-ground relay node 104 or by a gNB located on-ground or in a satellite.

It is obvious for a person skilled in the art that the depicted system is only an example of a part of a radio access system and in practice, the system may comprise a plurality of (e/g)NodeBs, the device may have an access to a plurality of radio cells and the system may comprise also other apparatuses, such as physical layer relay nodes or other network elements, etc. At least one of the (e/g)NodeBs or may be a Home(e/g)NodeB. Additionally, in a geographical area of a radio communication system a plurality of different kinds of radio cells as well as a plurality of radio cells may be provided. Radio cells may be macro cells (or umbrella cells) which are large cells, usually having a diameter of up to tens of kilometers, or smaller cells such as micro-, femto- or picocells. The (e/g)NodeBs of FIG. 1 may provide any kind of these cells. A cellular radio system may be implemented as a multilayer network including several kinds of cells. Typically, in multilayer networks, one access node provides one kind of a cell or cells, and thus a plurality of (e/g)NodeBs are required to provide such a network structure.

For fulfilling the need for improving the deployment and performance of communication systems, the concept of "plug-and-play" (e/g)NodeBs has been introduced. Typically, a network which is able to use "plug-and-play" (e/g)Node Bs, includes, in addition to Home (e/g)NodeBs (H(e/g)NodeBs), a home Node B gateway, or HNB-GW (not shown in FIG. 1). A HNB Gateway (HNB-GW), which is typically installed within an operator's network may aggregate traffic from a large number of HNBs back to a core network.

As conditions for a radio link change, in wireless communication that uses a radio link to transmit data, link adaptation, LA, is utilized to adapt to the changes in the conditions for the radio link. LA therefore comprises adjusting for example modulation, coding and other parameters regarding signals and protocols to the conditions on the radio link. The conditions on the radio link may be understood for example as pathloss, interference due to signals coming from other transmitters, sensitivity of the receiver or available transmitter power margin. The LA may also control transmission properties, such as transmit power, coding rate and/or the amount of used resources, of a channel in order to achieve a pre-defined average block error rate, BLER, target based on receiver feedback such as channel state information, CSI, channel quality indicator, CQI, and/or other feedback. To overcome possible non-ideal aspects in the process, an outer loop link adaptation, OLLA, algorithm may be utilized to adaptively modify mapping from signal-to-noise ratio, SNR, to CQI by for example modifying the measured SNR by an offset, according to whether data packets are received correctly or not, to adjust a block error rate, BLER, towards its target. The LA or OLLA may also be based on feedback received from a receiver. The feedback may indicate to the transmitter if the channel was correctly decoded, which may be understood as a positive acknowledgment, or not, which may be understood as a negative acknowledgment. In other words, the feedback may indicate correctness of data channel decoding. For example, a positive feedback may cause the LA/OLLA procedure to trigger a step-up, or if a negative feedback may cause the LA/OLLA procedure to trigger a step-down. The step-up and step-down sizes may be different, and they may be based on the BLER target. The BLER target of a wireless control channel may be for example 1% and the BLER target of a wireless data channel may be for example 10%. The BLER targets may be configurable by a user or they may be pre-determined. The average BLER of the channel may be measured for example based on the receiver feedback.

A receiver, that may be comprised in a device receiving data via a wireless network, may acknowledge a transmission of data transmitted by another device via the wireless network. The receiver may acknowledge data packet transmissions such that a subset or all of the data packet transmissions are acknowledged by providing feedback. Yet, it may occur that once the feedback is received at the device comprising the transmitter, the feedback may be ambiguous. For example, the feedback, which indicates correctness of data channel decoding, cannot be distinguished between a negative acknowledgment, NACK, and a discontinuous transmission, DTX. A data channel NACK may be considered to correspond to a positive acknowledgment of the corresponding control channel because the receiver tried, yet unsuccessfully, to decode the data channel based on the successful decoding of the corresponding control channel. A data channel DTX may be considered to correspond to a negative acknowledgment of the corresponding control channel because the receiver did not try to decode the data channel due to unsuccessful decoding of the corresponding control channel. The assumption therefore may be that the information in the control channel grants the corresponding data channel resources. Thus, if it is ambiguous how to interpret feedback from the receiver, it may not be clear how target BLER may be accurately achieved during the wireless transmission between the devices.

In 4G, a physical downlink control channel is a channel that carries for example downlink assignments of a physical downlink shared channel, PDSCH, that is a data channel. When providing feedback, the device comprising the receiver may not provide feedback related to the PDCCH transmissions directly, but the device may provide feedback related to PDSCH transmission as an ACK, which may be understood as a positive acknowledgment, and as a NACK, which may be understood as a negative acknowledgment. In case there is lack of ACK/NACK feedback i.e. DTX, this may be interpreted as to indicate that the device comprising the receiver, the receiving device, did not attempt to decode the PDSCH because, for example, the receiving device missed the PDCCH downlink assignment or because there was no such assignment. Therefore, if the eNB transmitted a PDCCH downlink assignment, then the eNB may determine the following feedback relations for the purpose of the PDCCH link adaptation:

- ACK: ACK may be determined as a positive acknowledgment of the PDCCH DL assignment
  ◦ The receiving device successfully decoded the PDCCH DL assignment and also decoding of the corresponding PDSCH was successful.
- NACK: NACK may be determined as a positive acknowledgment of the PDCCH DL assignment
  ◦ The receiving device successfully decoded the PDCCH DL assignment but the decoding of the corresponding PDSCH was not successfully
- DTX: DTX may be determined as a negative acknowledgment of the PDCCH DL assignment
  ◦ The receiving device did not attempt to decode the PDSCH because the corresponding PDCCH DL assignment was not successfully decoded.

Yet, there are features that may cause an ambiguous receiver feedback as it cannot be determined if the feedback is NACK or DTX. Thus, the eNB cannot establish if this feedback indicates a positive acknowledgment or a negative acknowledgment of the PDCCH DL assignment and it is unclear what the PDCCH LA/OLLA should do based on the ambiguous feedback. Table 1 below illustrates an example of this. In table 1, there are features defined in 3GPP standards, such as carrier aggregation, and these features may incur ambiguous NACK/DTX feedback.

Table 1

| HARQ-ACK(0) | HARQ-ACK(1) | HARQ-ACK(2) | HARQ-ACK(3) | $n_{\mathrm{PUCCH}}^{(1)}$ | $b(0)b(1)$ |
|---|---|---|---|---|---|
| ACK | ACK | ACK | ACK | $n_{\mathrm{PUCCH},1}^{(1)}$ | 1,1 |
| ACK | NACK/DTX | ACK | ACK | $n_{\mathrm{PUCCH},2}^{(1)}$ | 0,1 |
| NACK/DTX | ACK | ACK | ACK | $n_{\mathrm{PUCCH},1}^{(1)}$ | 0,1 |
| NACK/DTX | NACK/DTX | ACK | ACK | $n_{\mathrm{PUCCH},3}^{(1)}$ | 1,1 |
| ACK | ACK | ACK | NACK/DTX | $n_{\mathrm{PUCCH},1}^{(1)}$ | 1,0 |
| ACK | NACK/DTX | ACK | NACK/DTX | $n_{\mathrm{PUCCH},2}^{(1)}$ | 0,0 |
| NACK/DTX | ACK | ACK | NACK/DTX | $n_{\mathrm{PUCCH},1}^{(1)}$ | 0,0 |
| NACK/DTX | NACK/DTX | ACK | NACK/DTX | $n_{\mathrm{PUCCH},3}^{(1)}$ | 1,0 |
| ACK | ACK | NACK/DTX | ACK | $n_{\mathrm{PUCCH},2}^{(1)}$ | 1,1 |
| ACK | NACK/DTX | NACK/DTX | ACK | $n_{\mathrm{PUCCH},2}^{(1)}$ | 1,0 |
| NACK/DTX | ACK | NACK/DTX | ACK | $n_{\mathrm{PUCCH},3}^{(1)}$ | 0,1 |
| NACK/DTX | NACK/DTX | NACK/DTX | ACK | $n_{\mathrm{PUCCH},3}^{(1)}$ | 0,0 |
| ACK | ACK | NACK/DTX | NACK/DTX | $n_{\mathrm{PUCCH},0}^{(1)}$ | 1,1 |
| ACK | NACK/DTX | NACK/DTX | NACK/DTX | $n_{\mathrm{PUCCH},0}^{(1)}$ | 1,0 |

(continued)

| HARQ-ACK(0) | HARQ-ACK(1) | HARQ-ACK(2) | HARQ-ACK(3) | $n_{\mathrm{PUCCH}}^{(1)}$ | $b(0)b(1)$ |
|---|---|---|---|---|---|
| NACK/DTX | ACK | NACK/DTX | NACK/DTX | $n_{\mathrm{PUCCH},0}^{(1)}$ | 0,1 |
| NACK/DTX | NACK | NACK/DTX | NACK/DTX | $n_{\mathrm{PUCCH},0}^{(1)}$ | 0,0 |
| NACK | NACK/DTX | NACK/DTX | NACK/DTX | $n_{\mathrm{PUCCH},0}^{(1)}$ | 0,0 |
| DTX | DTX | NACK/DTX | NACK/DTX | No Transmission | |

Ambiguous NACK/DTX feedback from the receiver may occur also in 5G. This may be, for example, due to there being only 1-bit HARQ feedback per transport block reported by the receiving device. Thus, ambiguous NACK/DTX may be incurred for example in the following situations:

- There are more than one ACK/NACK bits corresponding to DL transmissions in more than one serving cell and/or in more than one DL slot reported on PUCCH format 1.

- There are more than one ACK/NACK bits corresponding to DL transmissions in more than one serving cell and/or in more than one DL slot reported on PUCCH format 3.

It is to be noted that in 5G there may be ambiguous NACK/DTX feedback from a receiver even if a semi-static or dynamic PDSCH HARQ-ACK codebook is used.

If an ambiguous feedback is received from a receiving device, that may be a terminal device, various approaches may be taken. For example, it may be determined that an ambiguous feedback is ignored, in other words, it is determined that no action is performed based on the received ambiguous feedback. Alternatively, the ambiguous feedback may be interpreted as either NACK or DTX based on a pre-determined rule. In some exemplary embodiments, the pre-determined rule may be a fixed rule or it may be based on criteria such as determining likelihood of the ambiguous feedback being NACK or DTX.

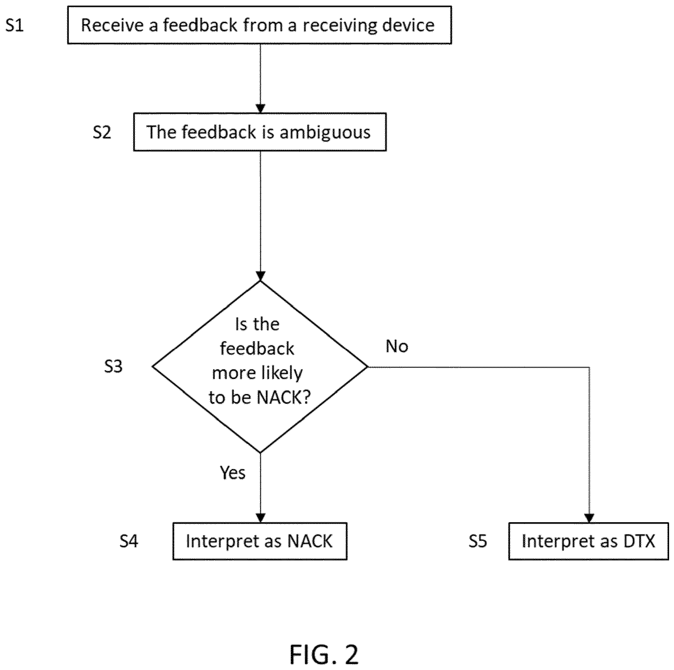

FIG. 2 illustrates a flow chart according to an exemplary embodiment in which the likelihood of an ambiguous feedback being NACK or DTX is determined and based on that, it is determined how the ambiguous feedback is to be interpreted. In this exemplary embodiment, data has been transmitted, by a transmitting device such as a terminal device or an access node, to a receiving device, which may also be a device such as a terminal device or an access node. The receiving device comprises a receiver that is capable of receiving the data transmitted by a transmitter comprised in the transmitting device over a wireless connection. In this exemplary embodiment, in S1, a feedback, which is receiver feedback, is received, by the transmitting device from the receiving device. In S2 it is determined, by the transmitting device that the feedback is ambiguous. If the feedback was unambiguous, the feedback could be understood such that it can be determined if the feedback is ACK or NACK or DTX. Yet, as the feedback is ambiguous, it is not clear if the feedback is to be interpreted as NACK or DTX. Thus, it is determined in S3 if the feedback is more likely to be NACK than DTX. If it is determined that the feedback is more likely to be NACK than DTX, then in S4 the feedback is interpreted as a NACK. However, if the feedback is more likely to be a DTX, then the feedback is interpreted in S5 as a DTX.

The determination if the feedback is more likely NACK than DTX may be performed in various manners, such as based on an average estimated control channel BLER. For example, if the average estimated control channel BLER is determined to be greater than a control channel BLER target, then the feedback may be interpreted as a DTX. However, if the average estimated control channel BLER is determined to be equal to or lower than the control channel BLER target, then the feedback may be interpreted as a NACK. As an alternative example, if the average estimated control channel BLER is determined greater than an average interpreted control channel BLER, then the feedback may be interpreted as a DTX. However, if the average estimated control channel BLER is equal to or lower than the average interpreted control channel BLER, then the feedback is interpreted as a NACK.

Thus, an average estimated control channel BLER is to be determined and compared to a feature associated with the BLER, wherein the feature may be the target or an average interpreted as described above. However, the average estimated control channel BLER may not be directly measurable due to the ambiguous feedback. Thus, the average estimated control channel BLER may be determined using various manner. In one example, the average estimated control channel BLER may be determined as: average estimated control channel BLER = f(CQI, DCI size, DCI aggregation level), in which the function is derived based on simulations. Thus, the function, i.e. f(CQI, DCI size, DCI aggregation level), is determined based on simulations. As another example, the average estimated control channel BLER may be determined as: average estimated control channel BLER = f(CQI, DCI size, DCI aggregation level) in which the function is derived based on machine learning such as machine learning regression. Thus, the function is determined based on machine learning and to determine the average estimated control channel BLER, also CQI, DCI size and DCI aggregation level, which are arguments of the function, are to be taken into account. The regression model may be achieved by supervised learning in which a dependent variable is the estimated control channel BLER, and independent variables are the CQI, downlink control information, DCI, size and DCI aggregation level. The data set used for the training may be collected from the transmitter and receiver in conditions which eliminate ambiguous feedback for example during single-carrier transmission. As yet another example, the average estimated control channel may be determined as: average estimated control channel BLER = f(average total data channel BLER) in which the function may be derived based on one of the following: theoretical assumptions, machine learning regression, or simulations. Thus, the function, which is average estimated control channel BLER = f(average total data channel BLER) may further be determined based on a theoretical model.

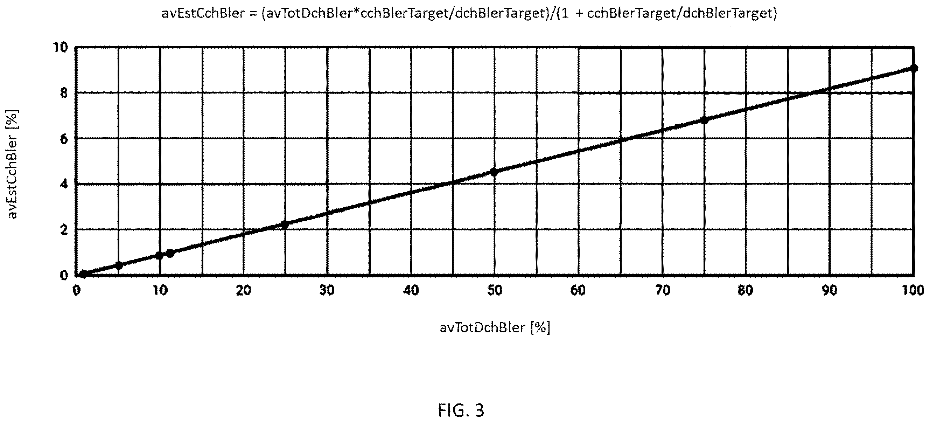

FIG. 3 illustrates an exemplary graph for a theoretical assumption. The graph is based on the assumption that when the data channel BLER target is achieved then also the control channel BLER target is achieved. It is to be noted however that additional more aggressive and more conservative function options may be used.

If machine learning regression is utilized, the regression model may be achieved by supervised learning in which a dependent variable is the average estimated control channel BLER and an independent variable is the average total data channel BLER. The data set for training the machine learning regression may be collected from the transmitter and receiver in conditions which eliminate ambiguous feedback for example during single-carrier transmission.

In the graph of FIG. 3, an example function avEstCchBler = f(avTotDchBler, cchBlertTarget, dchBlerTarget) in illustrated. cchBlerTarget is a configurable parameter that represents the control channel BLER target. Another configurable parameter is dchBlerTarget that represents data channel BLER target. An average interpreted control channel BLER may be determined based on the interpreted ambiguous feedback and the non-ambiguous feedback where an ACK or a NACK is a 0 [%] control channel BLER sample and a DTX is a 100 [%] BLER sample. The average total data channel BLER may be determined based on all feedback where an ACK is a 0 [%] data channel BLER sample and a NACK or a NACK/DTX or a DTX is a 100 [%] data channel BLER sample. The averaging of average interpreted control channel BLER, average estimated control channel BLER and average total data channel BLER may be determined using an exponential moving average filter, EMA, with a hard-coded or configurable window length.

In general, machine learning models may be categorized as supervised or unsupervised. Supervised models may apply what has been learned in the past using labelled examples to predict future events. A supervised algorithm may require a set of data known as training data, comprising input data and labels that are considered as the output values of machine learning algorithms. Starting from the analysis of the training data, the machine learning algorithm produces a model, such as a mathematical model, that makes predictions about the output values. After sufficient training, the model may provide accurate output values for any new input data. The accuracy of the model, that is, the adequacy of the training may be validated by techniques such as cross-validation method. When training, some part of the labelled training data is not used for training but saved for estimating the model accuracy, that is, if the model gives a correct label to an already known output value. An unsupervised algorithm in turn takes a set of data that comprises input data without labels and finds a structure in the input data, like grouping or clustering of data points. Therefore, unsupervised methods do not need a labelled input data for training in contrast to supervised methods but may learn from input data that has not been labelled. Multiple supervised machine learning models exist. For example, machine learning regression, which may be understood as regression algorithms or regression analysis, are examples of supervised machine learning. Supervised learning algorithms model dependencies and relationships between the target output and input features to predict the value for new data. Regression algorithms predict the output values based on input features from the data fed in the system. The regression algorithm builds a model on the features of training data and the used model to predict a value for new data. Machine learning regression may be used to identify a relationship between a dependent variable, which may be understood as the outcome value, and one or more independent variables, that may be understood as predictors. It may also be used for example to find a causal effect relationship between the variables.

The exemplary embodiments described above may have various advantages. One of the advantages is that as the estimation is in view of the average estimated control channel BLER, there is only one possible error source which makes it easier to fine-tune and maintain the implementations.

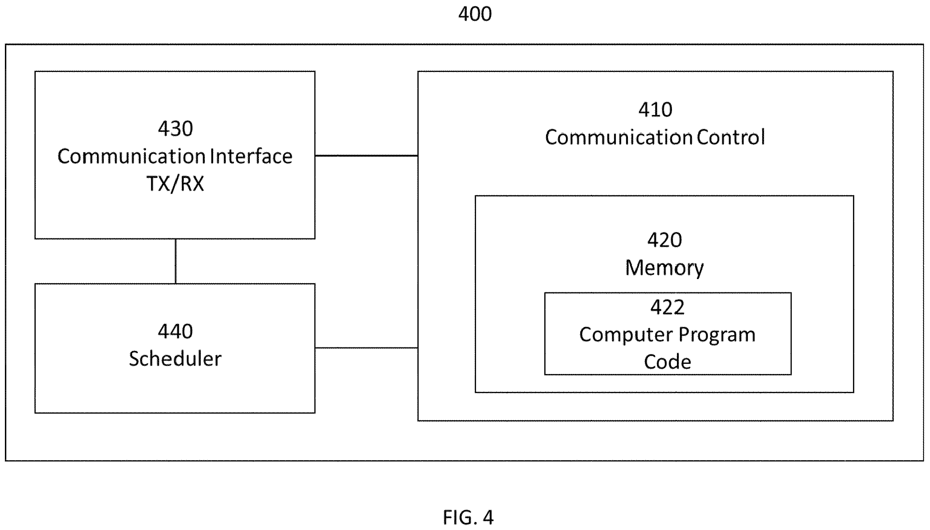

The apparatus 400 of FIG. 4 illustrates an example embodiment of an apparatus that may be an access node or be comprised in an access node. The apparatus may be, for example, a circuitry or a chipset applicable to an access node to realize the described embodiments. The apparatus 400 may be an electronic device comprising one or more electronic circuitries. The apparatus 400 may comprise a communication control circuitry 410 such as at least one processor, and at least one memory 420 including a computer program code (software) 422 wherein the at least one memory and the computer program code (software) 422 are configured, with the at least one processor, to cause the apparatus 400 to carry out any one of the example embodiments of the access node described above.

The memory 420 may be implemented using any suitable data storage technology, such as semiconductor-based memory devices, flash memory, magnetic memory devices and systems, optical memory devices and systems, fixed memory and removable memory. The memory may comprise a configuration database for storing configuration data.

The apparatus 400 may further comprise a communication interface 430 comprising hardware and/or software for realizing communication connectivity according to one or more communication protocols. The communication interface 430 may provide the apparatus with radio communication capabilities to communicate in the cellular communication system. The communication interface may, for example, provide a radio interface to terminal devices. The apparatus 400 may further comprise another interface towards a core network such as the network coordinator apparatus and/or to the access nodes of the cellular communication system. The apparatus 400 may further comprise a scheduler 440 that is configured to allocate resources.

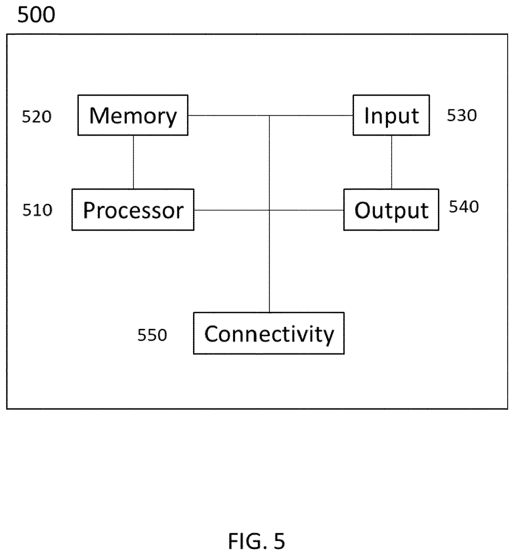

FIG. 5 illustrates an exemplary embodiment of an apparatus that may be comprised in, or connected to, a terminal device. The apparatus 500 comprises a processor 510. The processor 510 interprets computer program instructions and process data. The processor 510 may comprise one or more programmable processors. The processor 510 may comprise programmable hardware with embedded firmware and may, alternatively or additionally, comprise one or more application specific integrated circuits, ASICs.

The processor 510 is coupled to a memory 520. The processor is configured to read and write data to and from the memory 520. The memory 520 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 520 stores computer readable instructions that are execute by the processor 510. For example, non-volatile memory stores the computer readable instructions and the processor 510 executes the instructions using volatile memory for temporary storage of data and/or instructions.

The computer readable instructions may have been pre-stored to the memory 520 or, alternatively or additionally, they may be received, by the apparatus, via electromagnetic carrier signal and/or may be copied from a physical entity such as computer program product. Execution of the computer readable instructions causes the apparatus 500 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 500 further comprises, or is connected to, an input unit 530. The input unit 530 comprises one or more interfaces for receiving a user input. The apparatus 500 also comprises an output unit 540. The apparatus 500 may further comprise a connectivity unit 550. The connectivity unit 550 enables wired and/or wireless connectivity to external networks. The connectivity unit 550 may comprise one or more antennas and one or more receivers that may be integrated to the apparatus 500 or the apparatus 500 may be connected to. The connectivity unit 550 may comprise an integrated circuit or a set of integrated circuits that provide the wireless communication capability for the apparatus 500. Alternatively, the wireless connectivity may be a hardwired application specific integrated circuit, ASIC.

It is to be noted that the apparatus 500 may further comprise various components not illustrated in the Figure 5. The various components may be hardware components and/or software components.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

## Claims

1. An apparatus comprising means for performing:

   receiving a feedback indicating correctness of data channel decoding;
   determining that the feedback is an ambiguous feedback;
   determining an average estimated control channel block error rate;

comparing the average estimated control channel block error rate to a feature associated with a control channel block error rate, wherein the feature associated with the control channel block error rate is an average interpreted control channel block error rate; and, based on the comparison,

interpreting the feedback as one of the following: a negative acknowledgement or a discontinuous transmission.

2. An apparatus according to claim 1, wherein the average estimated control channel block error rate is a result of a function and the function is determined based on one of the following: one or more simulations or machine learning regression.

3. An apparatus according to claim 2, wherein the function has arguments that are parameters of a transmission and measurements related to the transmission.

4. An apparatus according to claim 3, wherein the arguments comprise one or more of the following: channel quality indicator, downlink control information size, downlink control information aggregation level, a number of transmit antennas and/or average total data channel block error rate.

5. An apparatus according to any of claims 2-4, wherein the function is derived based on machine learning regression in which a dependent variable is the estimated control channel block error rate and independent variables comprise channel quality indicator, downlink control information and downlink control information aggregation level.

6. An apparatus according to claim 5, wherein the apparatus (500) further comprises means for obtaining a data set for training the machine learning regression from a transmitter and a receiver operating in conditions that eliminate the ambiguous feedback.

7. An apparatus according to claim 6, wherein the data set is obtained during single-carrier transmission.

8. An apparatus according to any previous claim, wherein the feedback is interpreted as the discontinuous transmission if the average estimated control channel block error rate is greater than the feature associated with the control channel block error rate.

9. An apparatus according to any previous claim, wherein the feedback is interpreted as the negative acknowledgement if the average estimated control channel block error rate is less than, or equal to, the feature associated with the control channel block error rate.

10. An apparatus according to any previous claim, wherein the feedback is interpreted by a control channel outer loop link adaptation.

11. An apparatus according to any previous claim, wherein the apparatus is an access node.

12. An apparatus according to any previous claims, wherein the means comprises:

at least one processor; and
at least one memory including computer program code, the at least one memory and computer program code configured to, with the at least one processor, cause the performance of the apparatus.

13. A method comprising:

receiving a feedback, indicating correctness of data channel decoding;
determining that the feedback is an ambiguous feedback;
determining an average estimated control channel block error rate;
comparing the average estimated control channel block error rate to a feature associated with a control channel block error rate, wherein the feature associated with the control channel block error rate is an average interpreted control channel block error rate; and, based on the comparison,
interpreting the feedback as one of the following: a negative acknowledgement; a discontinuous transmission.

14. A method according to claim 13, wherein the average estimated control channel block error rate is a result of a function and the function is determined based on one of the following: one or more simulations or machine learning regression.

15. A computer program product comprising instructions for causing an apparatus (500) to perform at least the following:

receive a feedback, indicating correctness of data channel decoding;
determine that the feedback is an ambiguous feedback;
determine an average estimated control channel block error rate;
compare the average estimated control channel block error rate to a feature associated with a control channel block error rate, wherein the feature associated with the control channel block error rate is an average interpreted control channel block error rate; and, based on the comparison,
interpreting the feedback as one of the following: a negative acknowledgement or a discontinuous transmission.

FIG. 1

EP 4 099 599 A1

S1 | Receive a feedback from a receiving device

S2 | The feedback is ambiguous

S3 | Is the feedback more likely to be NACK?

No

Yes

S4 | Interpret as NACK

S5 | Interpret as DTX

FIG. 2

$$avEstCchBler = (avTotDchBler*cchBlerTarget/dchBlerTarget)/(1 + cchBlerTarget/dchBlerTarget)$$

FIG. 3

FIG. 4

EP 4 099 599 A1

500

```
┌──────────────────────────────────────────────┐
│                                                │
│   520  ┌──────────┐          ┌────────┐  530   │
│        │  Memory  │          │ Input  │        │
│        └─────┬────┘          └───┬────┘        │
│              │        │          │             │
│   510  ┌─────┴────┐   │      ┌───┴────┐  540   │
│        │ Processor │──┼──────│ Output │        │
│        └───────────┘  │      └────────┘        │
│                       │                        │
│              550  ┌───┴──────────┐             │
│                   │ Connectivity │             │
│                   └──────────────┘             │
│                                                │
└──────────────────────────────────────────────┘
```

FIG. 5

Europäisches Patentamt

European Patent Office

Office européen des brevets

# EUROPEAN SEARCH REPORT

Application Number

EP 22 17 5973

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2018/207002 A1 (ERICSSON TELEFON AB L M [SE]) 15 November 2018 (2018-11-15) | 1,8-11, 13,15 | INV. H04L1/18 H04L1/20 |
| Y | * abstract * <br> * page 6, paragraph 26 - page 10, paragraph 29 * <br> * page 13, paragraph 36 - page 24, paragraph 74 * <br> * claims 1-37 * | 2-7,14 | |
| X | WO 2016/075517 A1 (ERICSSON TELEFON AB L M [SE]) 19 May 2016 (2016-05-19) <br> * abstract * <br> * page 8, paragraph 30 - page 29, paragraph 80 * | 1,8-11, 13,15 | |
| Y | WO 2020/143902 A1 (NOKIA TECHNOLOGIES OY [FI]) 16 July 2020 (2020-07-16) <br> * abstract * <br> * page 13, line 13 - page 15, line 25 * <br> * page 20, line 20 - page 22, line 27 * | 2-7,14 | |

TECHNICAL FIELDS SEARCHED (IPC)

H04L

The present search report has been drawn up for all claims

| Place of search | Date of completion of the search | Examiner |
|---|---|---|
| Munich | 18 October 2022 | Toumpoulidis, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 5973

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2022

| Patent document cited in search report | | Publication date | Patent family member(s) | | Publication date |
|---|---|---|---|---|---|
| WO 2018207002 | A1 | 15-11-2018 | NONE | | |
| WO 2016075517 | A1 | 19-05-2016 | US | 2016261365 A1 | 08-09-2016 |
| | | | WO | 2016075517 A1 | 19-05-2016 |
| WO 2020143902 | A1 | 16-07-2020 | CN | 113273108 A | 17-08-2021 |
| | | | EP | 3909158 A1 | 17-11-2021 |
| | | | US | 2022094464 A1 | 24-03-2022 |
| | | | WO | 2020143902 A1 | 16-07-2020 |

EPO FORM P0459

For more details about this annex : see Official Journal of the European Patent Office, No. 12/82